# EUROPÄISCHE PATENTSCHRIFT

(11) **EP 0 406 727 B1**
(45) Veröffentlichungstag und Bekanntmachung des Hinweises auf die Patenterteilung: **06.05.1999**
(21) Anmeldenummer: 90112482.6
(22) Anmeldetag: 29.06.1990
(51) Int. Cl.: C08L 67/02, C08K 3/36, C08K 5/11, C08L 71/02, C08K 5/10

(54) **Verfahren zur Herstellung eines Polyesterrohstoffes**
Method of preparation of a polyester raw material
Procédé de préparation d'une matière première de polyester

(30) Priorität: 07.07.1989 DE 3922329
(43) Veröffentlichungstag der Anmeldung: 09.01.1991
(73) Patentinhaber: HOECHST AKTIENGESELLSCHAFT, 65926 Frankfurt am Main (DE)
(72) Erfinder: Dallmann, Hermann, Dr., D-6200 Wiesbaden (DE); Ferdinand, Andreas, Dr., D-6200 Wiesbaden (DE); Janocha, Siegfried, Dr., D-6200 Wiesbaden (DE)
(74) Vertreter: Zounek, Nikolai, Dipl.-Ing.

(56) Entgegenhaltungen:
- EP-A- 0 066 997
- EP-A- 0 125 482
- EP-A- 0 236 945
- CHEMICAL ABSTRACTS Band 100, Nr. 20, 14. Mai 1984, Seite 45, linke Spalte, Zusammenfassung Nr. 157612f, Columbus, Ohio, US; & JP - A - 58171437 (TEIJIN LTD.) 08.10.1983

## Beschreibung

Die Erfindung betrifft ein Verfahren zur Herstellung eines Polyesterrohstoffs, der homogen verteilte anorganische und/oder organische Inertpartikel enthält sowie die Verwendung dieses Verfahrens zur Herstellung von Folien, die ein- oder biaxial orientiert und thermofixiert sind.

Biaxial orientierte Folien aus Polyester, insbesondere aus Polyethylenterephthalat und/oder Polyethylennaphthalat, finden wegen ihrer überlegenen Eigenschaften wie ihrer Zugfestigkeit, ihrer Reißfestigkeit, ihres Elastizitätsmoduls, ihrer Transparenz, ihrer chemischen und thermischen Beständigkeit und dergleichen Anwendung in großem Umfang auf vielen technischen Gebieten wie z. B. dem reprografischen Sektor, als Dielektrikum für Kondensatoren, als Trägerfolien für magnetische Aufzeichnungsmedien wie z. B. für Audio-, Video- und Computerbänder sowie Floppy Disks, Thermodruckbänder usw.

Die Polyesterfolien müssen für die verschiedenen Einsatzgebiete spezifische Anforderungen erfüllen, die üblicherweise mit Hilfe der Rohstoffrezepturen oder mittels bestimmter Verfahrenstechniken während der Folienherstellung eingestellt werden.

Der Oberflächenstruktur der Folien kommt hierbei generell eine besondere Bedeutung zu, weil sie für das Gleit- und Abriebverhalten bei der Herstellung und Verarbeitung der Folien ausschlaggebend ist. Speziell bei Magnetbandträgerfolien werden neben einem gleichmäßigen und guten Gleitverhalten und hoher Abriebfestigkeit besonders hohe Anforderungen an die Homogenität der Oberfläche gestellt, weil unerwünschte Erhebungen auf der Oberfläche innerhalb der nachfolgend auf diese Oberfläche aufgebrachten Magnetschicht zu Informationsverlusten führen können und damit die Einsatzmöglichkeiten des Informationsträgers einschränken.

Es gehört zum Stand der Technik, die genannten Nachteile durch Einarbeitung anorganischer und/oder organischer Inertpartikel mit definierter Korngrößenverteilung zu überwinden bzw. abzumildern. Beispiele für derartige Inertpartikel, die allein oder in Kombination eingesetzt werden können, sind CaCO₃, TiO₂, Al₂O₃, ZrO₂, BaSO₄, Calciumphosphat, Kaolin, SiO₂ sowie natürliche und synthetische Silikate. Von besonderem Interesse sind die u. a. In der EP-A-0 216 278 und der EP-A-0 236 945 beschriebenen kugelförmigen Metalloxide sowie die in der EP-A-0 125 482 beschriebenen sphärischen organischen Inertpartikel, die eine extrem enge Korngrößenverteilung aufweisen.

Die Inertpartikel können sowohl über glykolische Dispersionen (s.bspw. JP-A 58171437 aus CA Bd 100, Nr. 157612g) als auch Masterbatche (s. bspw. EP-A-0 066 997) in den Polyester eingearbeitet werden.

Die Einarbeitung der Inertpartikel über glykolische Dispersionen ist mit einer Reihe von Nachteilen verbunden, die sich auf das Eigenschaftsbild der aus dem Rohstoff hergestellten Formkörper, speziell der Folien, negativ auswirken können. So ist die Stabilität glykolischer Dispersionen von Inertpartikeln in Abhängigkeit vom Typ und der Größe derselben mehr oder weniger stark begrenzt. Hierdurch kann es zur Sedimentation der Inertpartikel und damit verbunden leicht zur Bildung von Agglomeraten kommen, die sich wiederum auf die zur Entfernung von Grobkornanteilen erforderliche Filtration negativ auswirken kann. Eine Behebung dieses Mangels wird durch den Einsatz von Dispergierhilfsmitteln und/oder durch Rühren der Dispersionen bis unmittelbar vor ihrem Einsatz oder über eine Oberflächenmodifizierung der Inertpartikel versucht. Ein weiterer Nachteil ist, daß die Dispersionen in das heiße Reaktionsgemisch hinzudosiert werden müssen. Durch diesen Temperaturschock kann es ebenfalls zur Bildung von Agglomeraten kommen.

Alternativ zur Dispersionsroute können die Inertpartikel wie bereits erwähnt über ein Masterbatch im Rahmen der Folienherstellung in den Polyester eingearbeitet werden. Die Herstellung agglomeratfreier Masterbatche setzt aber die Installation hochwertiger Mischaggregate voraus, darüber hinaus soll der Abbau des Polyesters infolge thermischer Belastung in Grenzen gehalten werden. Trotz des Einsatzes aufwendiger Mischaggregate lassen sich bestimmte Inertpartikel wie z. B. hochdisperse Kieselsäuren oder monodisperse SiO₂-Partikel nur bedingt agglomeratfrei in den Polyester einarbeiten. Um eine wirklich gleichmäßige Verteilung der Inertpartikel zu gewährleisten, ist man zusätzlich an bestimmte Höchstkonzentrationen gebunden, wodurch die Wirtschaftlichkeit dieser Verfahrensvariante beachtlich beeinträchtigt wird.

Aufgabe der vorliegenden Erfindung war es daher ein, Verfahren zur Verfügung zu stellen, mit dem ein Polyesterrohstoff hergestelltwachen kann der Inertpartikel in gleichmäßiger Verteilung enthält und frei von Agglomeraten ist, die bei einer Einarbeitung der Inertpartikel über Dispersionen auftreten können.

Gelöst wird diese Aufgabe durch ein Verfahren zur homogenen Verteilung von Inertpartikeln innerhalb eines Polyesterrohstoffes, dadurch gekennzeichnet, daß die Inertpartikel dem Polyester oder der Reaktionsmischung während der Polyesterrohstoffherstellung in Form einer wiederaufschmelzbaren Mischung bestehend aus Inertpartikeln und einem mit dem Polyester verträglichen Dispergiermittel, das einen Schmelzpunkt unterhalb von 200°C besitzt, zugesetzt werden. Bevorzugt enthält der nach diesem Verfahren hergestellte Polyestervorstoff 80 bis 99,998 Gew.-% Polyester, 0,001 bis 10 Gew.-% Inertpartikel mit einer mittleren Teilchengröße im Bereich von 0,02 bis 5 µm und 0,001 bis 10 Gew.-% eines mit dem Polyester verträglichen Dispergiermittels, dessen Schmelzpunkt unter 200 °C, vorzugsweise unterhalb von 120 °C, liegt.

Als Polyester werden im Rahmen der Erfindung Homo- und Copolykondensate, Gemische verschiedener Polyester sowie Abmischungen oder Blends von Polyestern mit anderen Polymeren und gegebenenfalls Harzen angesehen.

Die Herstellung der Polyester kann sowohl nach dem Umesterungsverfahren, z. B. mit Hilfe von Umesterungskatalysatoren wie z. B. Zn-, Mg-, Ca-, Mn-, Li- oder Ge-Salzen, wie auch nach dem Direktesterverfahren erfolgen, bei dem Antimonverbindungen als Polykondensationskatalysatoren und Phosphorverbindungen als Stabilisatoren verwendet werden. Ihr RSV-Wert liegt vorzugsweise im Bereich von 0,60 bis 0,90 dl/g.

Beispiele für Polyester sind Polykondensate aus Terephthalsäure, Isophthalsäure oder 2,6-Naphthalindicarbonsäure mit Glykolen mit 2 bis 10 Kohlenstoffatomen wie Polyethylenterephthalat, Polybutylenterephthalat, Poly-1,4-cyclohexylen-dimethylenterephthalat, oder Polyethylen-2,6-naphthalindicarboxylat.

Die Polyester können bis zu 30 Mol-% aus Comonomereinheiten aufgebaut sein, wobei eine Variation in der Glykol- und/oder der Säurekomponente möglich ist. Als Säurekomponente können die Copolyester u. a. Adipinsäure, Glutarsäure, Bernsteinsäure, Sebazinsäure, Phthalsäure, Isophthalsäure, 5-Na-sulfoisophthalsäure oder polyfunktionelle Säuren wie Trimelithsäure u. a. enthalten.

Die Polyestergemische können ausPolyester-Homopolymeren, Polyester-Copolymeren oder Polyester-Homo- und Copolymeren bestehen. Beispiele hierfür sind Abmischungen von Polyethylenterephthalat/Polybutylenterephthalat, Polyethylenterephthalat/Polyethylenisophthalat oder Polyethylenisophthalat/5-Natriumsulfoisophthalat.

Beispiele für Polymere, die der Polyester zur Verbesserung seiner Streckbarkeit, seiner mechanischen Eigenschaften oder zur Einstellung spezieller Oberflächeneigenschaften daraus hergestellter Formkörper enthalten kann, sind Polyolefin-Homo- oder -Copolymere wie Polyethylen, Polypropylen, Poly-4-methylpenten, Ethylen-Vinylacetat-Copolymere, die ihrerseits verseift sein können, Ionomere, Polyamide, Polylactone, Polycarbonate, Polytetrafluorethylen, Polysulfone u. a. Diese Substanzen können während der Rohstoff- oder Folienherstellung in den Polyester eingearbeitet werden.

Bei den Harzen handelt es sich um natürliche oder synthetische niedermolekulare Harze mit einem Erweichungspunkt im Bereich von 60 bis 180 °C, bestimmt nach ASTM E 28. Von den zahlreichen niedermolekularen Harzen sind die Kohlenwasserstoffharze, insbesondere die Erdölharze (Petroleumharze), Styrolharze, Cyclopentadienharze und Terpenharze bevorzugt.

Die Polyester nach der vorliegenden Erfindung können neben den schlupffördernden Inertpartikeln noch zusätzlich organische Schlupf-Gleitmittel/Nukleierungsmittel, Antioxidantien, Thermostabilisatoren, Antistatika (z. B. Salze von Alkylsulfonsäuren oder sulfonierte Polyoxyalkylene) u. a. enthalten. Beispiele für Additive, die sich sowohl auf das Gleit- als auch das Abriebverhalten von Polyesterfolien positiv auswirken, sind langkettige Monocarbonsäuren und Ester derselben wie z.B. ihre Esterwachssalze wie Palmitate, Stearate oder Montanate.

Beispiele für die Inertpartikel sind die eingangs bereits erwähnten anorganischen und organischen Partikel mit Teilchendurchmessern im Bereich von 0,02 bis 5 µm. Die Inertpartikel sind in dem Polyesterrohstoff in einer Konzentration von 0,001 bis 10 Gew.-% bevorzugt 0,1 bis 5,0 Gew.-% vorhanden. Bevorzugt sind kugelförmige Partikel auf Basis von Polymeren und/oder aus Metalloxiden wie z. B. SiO₂, TiO₂, ZrO₂ und Al₂O₃ sowie Mischoxyde derselben, die sich durch bekannte Verfahren auf eine besonders enge Korngrößenverteilung einstellen lassen. Die Korngrößenverteilung läßt sich nach Woods et al in 'Journal of Paint Technology', Vol. 40, No. 527, Seite 545 (1968), durch den Quotient aus dem Gewichtsmittel des Teilchendurchmessers (D_{w}) und dem Zahlenmittel des Teilchendurchmessers (Dₙ) angeben.

Dieser Quotient ergibt bei den vorzugsweise im Rahmen der Erfindung eingesetzten Inertpartikeln einen Wert von <1,5, besonders bevorzugt < 1,2.

Die Auswahl des als dritte Komponente in dem erfindungsgemäß hergestellten Polyesterrohstoff enthaltenen Mittels, das als Dispergiermittel für die Inertpartikel dient und bei Raumtemperatur zähflüssig oder fest ist, erfolgt vorrangig unter dem Gesichtspunkt der Verträglichkeit mit dem Polyester. Geeignet sind u. a. die Bausteine des Polyesters wie z. B. der Dimethylester der Isophthalsäure, niedermolekulare Polyester, Polyalkylenglykole, Copolyester z. B. aus Terephthalsäure und Adipinsäure, Wachse d.h. Esterwachse und Paraffinwachse, natürliche und synthetische niedermolekulare Harze, Polysiloxane, Polyolefine, Polyamide u.ä. sowie alle Subsanzen, die in den verwendeten Mengen entweder keinen Einfluß auf das Eigenschaftsbild der aus dem erfindungsgemäßen Polyester hergestellten Formkörper ausüben oder sich zusätzlich positiv auswirken.

Die erwähnten Dispergiermittel können entweder allein oder in Kombination verwendet werden und werden bevorzugt in eines Menge von 0,001 bis 10 Gew.-% eingesetzt.

Entscheidende Parameter für die Eignung der Dispergiermittel sind ihre Polarität und ihr Erstarrungspunkt, im Zusammenhang damit auch ihr Molekulargewicht. Die Polarität ist über die chemische Zusammensetzung des organischen Dispergiermittels beeinflußbar. Zur Herstellung stabiler Dispersionen der Inertpartikel ist es günstig, Dispergiermittel auszuwählen, die eine ähnliche Polarität wie die zu dispergierenden Partikel aufweisen. Für die mehr oder weniger hydrophilen SiO₂-Partikel ist es z.B. vorteilhaft, Dispergiermittel höherer Polarität zu verwenden, für modifizierte SiO₂-Partikel wie sie u.a. in der DE-A-36 16 133 beschrieben werden, die einen hydrophoben Charakter aufweisen, bietet sich dagegen ein unpolares Dispergiermittel an.

Das Molekulargewicht des Dispergiermittels varriert von einigen Hundert zu auf einigen Hunderttausend. Vorzugsweise liegt es im Bereich von 300 bis 600 000.

Die Herstellung der Dispersionen kann im Anschluß an die Synthese der Inertpartikel, z.B. im Anschluß an die Herstellung sphärischer Metalloxidpartikel mit enger Korngrößenverteilung nach dem Sol-Gel-Verfahren durch Substitution des Reaktionsmediums und nachfolgendes Dispergieren der fertigen Partikel in einem ausgewählten Mittel, wie z.B. einem Polyalkylenglykol, in der Wärme erfolgen.

Lassen sich die Herstellungsverfahren der Inertpartikel und der stabilen Dispersionen nicht miteinander verbinden, dann kann die Herstellung der stabilen Dispersion durch nachträgliches Einarbeiten der Inertpartikel in das geschmolzene Dispergiermedium mittels bekannter Methoden erfolgen.

Die Konzentration der Dispersion an Inertpartikeln liegt im Bereich von 0,1 bis 70 Gew.-%, vorzugsweise zwischen 20 bis 60 Gew.-%. Die Gemische sind wiederaufschmelzbar und gießbar und lassen sich damit in gut handhabbarer Form, z.B. von Schuppen, Granulate etc., bringen.

Die Dispergiermittel besitzen insbesondere einen Schmelzpunkt unterhalb von 200 °C, vorzugsweise unterhalb von 120 °C, und sind bei Raumtemperatur zähflüssig oder fest.

Der wesentliche Vorteil der erfindungsgemäß verwendeten Gemische im Vergleich mit glykolischen Dispersionen besteht in der nahezu unbegrenzten Lagerstabilität und damit verbunden dem Wegfall der bei Einsatz glykolischer Dispersionen von Inertpartikeln beschriebenen Nachteile und daraus resultierenden notwendigen Aufarbeitungsprozessen vor dem bestimmungsgemäßen Einsatz.

Die Mischung aus den Inertpartikeln und dem Dispergiermittel sowie gegebenenfalls die o.a. Additive kann entsprechend den glykolischen Dispersionen in einer beliebigen Phase der Rohstoffherstellung zugesetzt werden, vorzugsweise vor oder nach der Umesterung oder zu Beginn der Polykondensation, wenn die Viskosität der Reaktionsmischung noch gering ist. Hierdurch wird eine gute Verteilung der Inertpartikel in der Matrix erzielt. Da das Gemisch erst aufgeschmolzen werden muß, entfällt der bei Zusatz glykolischer Dispersionen auftretende teilweise mit der Bildung von Agglomeraten verbundene Temperaturschock.

Die Mischungen aus Inertpartikeln und polyesterverträglichen Dispergiermitteln können alternativ hierzu auch nach der Fertigstellung des Polyesters und während der Herstellung von Folien dem Polyester zugesetzt werden. Diese Methode ist dann zu bevorzugen, wenn gleichzeitig mit den Inertpartikeln weitere Additive in den Polyester eingearbeitet werden sollen, die während der mehrstündigen Polykondensationszeit zur Zersetzung tendieren. Der erfindungsgemäße Polyesterrohstoff entsteht dann gewissermaßen in situ während der Herstellung der Folien im Inneren des Extruders.

Aus dem erfindungsgemäß hergestellten Polyesterrohstoff lassen sich vorteilhaft insbesondere biaxial streckorientierte Folien herstellen. Die Folie wird nach dem Extrusionsverfahren hergestellt, wobei das die Inertpartikel und das Dispergiermittel enthaltende Polyestermaterial aufgeschmolzen, zu einer Vorfolie extrudiert und auf einer Kühlwalze abgeschreckt und dieser Film anschließend in Längsrichtung und/oder Querrichtung bei Temperaturen zwischen dem Glaspunkt des Polymeren und 160 °C mit einem Flächenstreckverhältnis vorzugsweise im Bereich von 4 bis 30 verstreckt und anschließend bei Temperaturen zwischen 150 und 240 °C hitzefixiert wird. Die Anzahl und Reihenfolge der Längs- und Querstreckstufen ist nicht fest vorgegeben, sondern richtet sich nach den Erfordernissen. Die einzelnen Streckvorgänge "längs" und "quer" können ein- oder mehrstufig durchgeführt werden. Eine gleichzeitige Längs- und Querstreckung (Simultanstreckung) ist ebenso möglich.

Die aus den Streckverfahren resultierenden Folien können nur in einer Richtung eine Festigkeit aufweisen (monoaxial gestreckt), in beiden Richtungen ausgewogene mechanische Eigenschaften aufweisen (balanced Folien) oder in Quer- und/oder Längsrichtung besondere Festigkeiten aufweisen (tensilized oder supertensilized Folien).

Die Folien können ein- oder mehrschichtig sein, sie können symmetrisch oder asymmetrisch aufgebaut sein, wobei verschieden rezepturierte bzw. rezepturierte oder nicht rezepturierte Polymere oder Polymere gleicher chemischer Zusammensetzung, jedoch mit unterschiedlichem Molekulargewicht und verschiedener Viskosität durch Coextrusion vereinigt sein können.

Folien aus dem erfindungsgemäß hergestellten Rohstoff können sowohl auf dem technischen Sektor, z. B. für Kondensatoren, magnetische Aufzeichnungsmedien, reprografische Zwecke, als Trenn- oder Prägefolien u. a., als auch auf dem Verpackungssektor verwendet werden.

Im folgenden soll die Erfindung beispielhaft anhand von Ausführungsbeispielen näher erläutert werden.

Die in den Beispielen angegebenen Parameter sind insbesondere auf die folgende Art und Weise bestimmt worden:
1. RSV-Wert:
   Der Wert gibt die reduzierte spezifische Viskosität an, er wurde nach DIN 53 728, Blatt 2, gemessen.
2. Abriebfestigkeit:
   Sie wurde mit Hilfe eines selbst entwickelten Gerätes geprüft, bei dem ein 12,5 mm breites Folienband mit konstanter Geschwindigkeit und Bahnspannung zunächst über Reinigungswalzen, dann über einen Umlenkstift aus Edelstahl und anschließend über zwei als Meßrollen dienende Gummiwalzen geführt wird. Die Beladung der Gummirollen diente als Maßstab für die Abriebfestigkeit der Folie. Als Vergleiche dienten Meßstandards von 1 (sehr abriebfest) bis 6 (sehr starker Abrieb).
3. F₅-Longitudinalwert:
   Der Wert gibt die Reißfestigkeit der Folie bei 5 % Dehnung an. Die Messung erfolgte gemäß DIN 53 455.
4. E-Modul:
   Der Elastizitätsmodul wurde nach DIN 53 457 gemessen. F₅-Wert und E-Modul wurden mit einem ZWICK-Gerät Typ 1445 bestimmt, wobei die Meßlänge 100 mm, die Streifenbreite 15 mm und die Abzugsgeschwindigkeit 10 mm/min (E-Modul) bzw. 100 mm/min betrugen. Die angegebenen Werte basieren auf fünf Einzelmessungen.
5. Reibungszahl:
   Die Reibungszahl gibt den Schlupf der Folie an. Er wurde gemessen nach DIN 53 375.
6. Rₐ-Wert:
   Der Rₐ-Wert drückt die Oberflächenrauhigkeit der Folie zahlenmäßig als arithmetischer Mittelwert aller Abstände des Rauhigkeitsprofils R von der Mittellinie aus. Die Messung erfolgte nach DIN 4768 mittels Oberflächenmeßgerät Perthometer SP 6 der Firma Feinprüf GmbH, Göttingen. Die angegebenen Werte basieren auf sechs Einzelmessungen, wobei der höchste Wert bei der Mittelwertbildung unberücksichtigt blieb. Der cut off betrug jeweils 0,08 mm.

### Beispiel 1

Es wurde ein Polyesterrohstoff aus Dimethylterephthalat und Ethylenglykol in üblicher Weise unter Verwendung von Manganacetat als Umesterungskatalysator, Antimontrioxid als Polymerisationskatalysator und phosphoriger Säure als Stabilisator hergestellt, der einen RSV-Wert von 0,81 dl/g hatte. Der Polyesterrohstoff enthielt 1 500 ppm monodisperse, kugelförmige SiO₂-Partikel mit einem Durchmesser von 0,5 µm, wobei der Quotient aus dem Gewichtsmittel des Teilchendurchmessers (D_{w}) und dem Zahlenmittel des Teilchendurchmessers (Dₙ) 1,2 betrug, und ferner 300 ppm monodisperse, kugelförmige SiO₂-Partikel mit einem Durchmesser von 0,7 µm und entsprechenden Eigenschaften.

Die kugelförmigen SiO₂-Partikel wurden im Anschluß an den Umesterungsprozeß jeweils in Form eines Gemisches mit 50 Gew.-% Polyethylenglykol (PEG) 1000 mit einer mittleren Molmasse im Bereich von 950 bis 1 050 und einem Erstarrungspunkt zwischen 35 und 40 °C zugesetzt.

Aus dem erhaltenen Rohstoff wurde eine 12 µm dicke, biaxial orientierte Folie hergestellt, indem das Granulat in einem Extruder aufgeschmolzen, mittels einer Breitschlitzdüse auf eine hochglanzpolierte Kühlwalze extrudiert und die erhaltene amorphe Vorfolie zunächst mittels Walzen zweistufig bei Temperaturen im Bereich von 107 °C bis 115 °C um das 4,2fache längs- sowie anschließend bei Temperaturen um 95 °C mittels umlaufender Kluppenketten um das 3,6fache quergestreckt sowie bei 200 °C thermofixiert wurde.

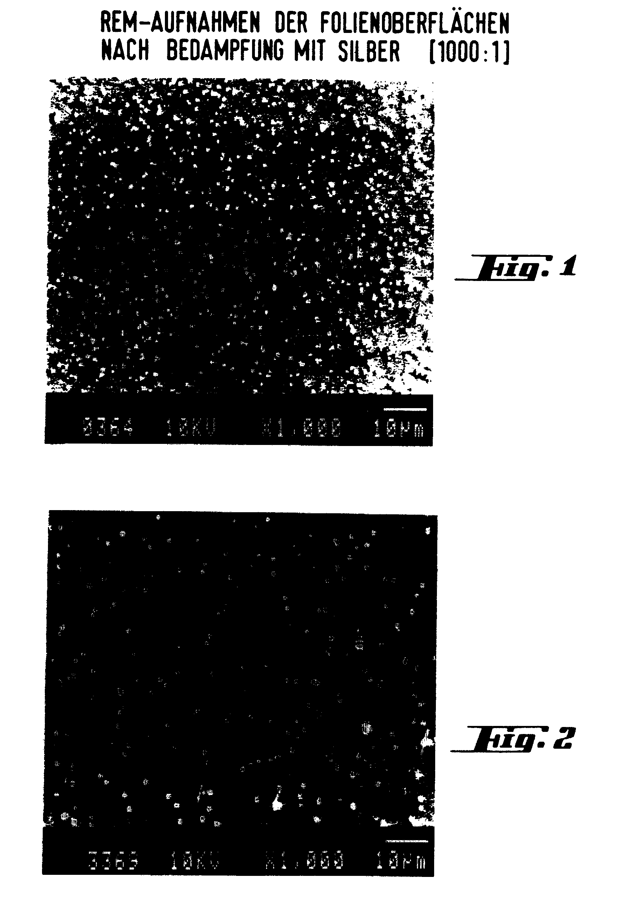

Die Folie wies, wie die REM-Aufnahme nach 6°-Schrägbedampfung der Fig. 1 zeigt, eine gute Verteilung der auf die beschriebene Weise eingearbeiteten SiO₂-Partikel auf. Die physikalischen Eigenschaften der Folie sind in der Tabelle am Ende der Beispiele angegeben.

### Beispiel 2

Der in Beispiel 1 beschriebene 1 500 ppm monodisperse, kugelförmige SiO₂-Partikel mit einem Durchmesser von 0,5 µm und 300 ppm monodisperse, kugelförmige SiO₂-Partikel mit einem Durchmesser von 0,7 µm enthaltende Polyesterrohstoff wurde nach dem Trocknen bei 160 °C in einem Extruder aufgeschmolzen und durch eine Breitschlitzdüse auf eine hochglanzpolierte Kühlwalze mit einer Oberflächentemperatur von 25 °C extrudiert. Die amorphe ca. 32 µm starke Vorfolie wurde mittels Walzen in Längsrichtung bei Temperaturen von ca. 100 °C um das 3,8fache längs- und bei Temperaturen um 110 °C im Stenterrahmen um das 4fache querverstreckt sowie nachfolgend bei 200 °C 5 s fixiert. Die physikalischen Eigenschaften der erhaltenen ca. 2 µm starken Folie sind ebenso in der Tabelle zusammengestellt.

### Beispiel 3

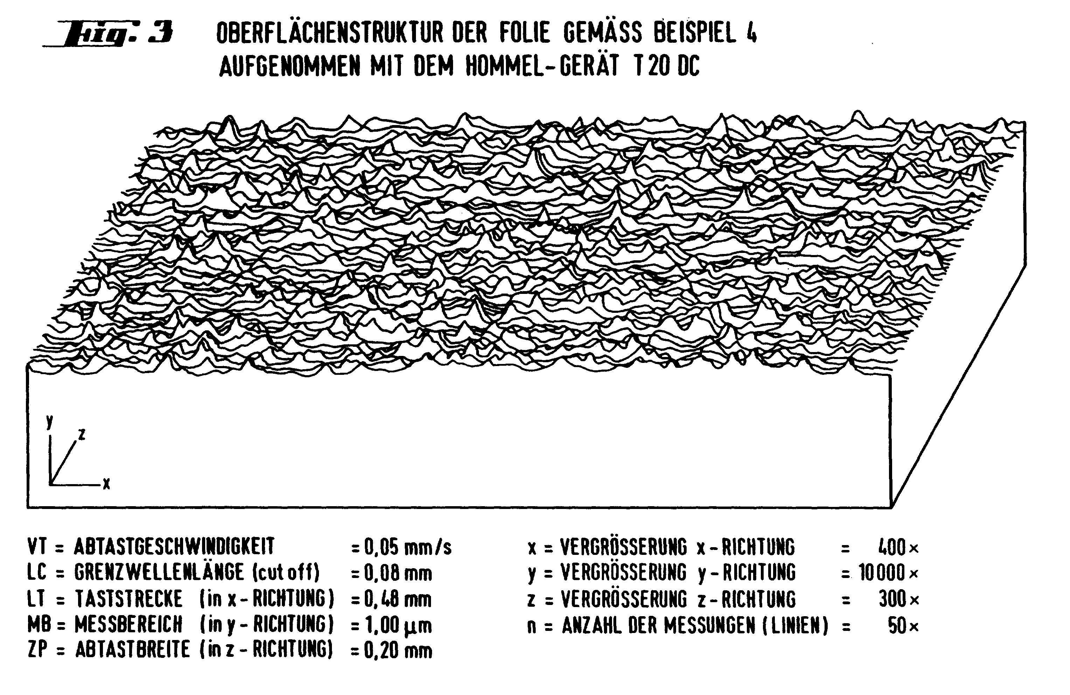

Zu einem additivfreien Polyesterrohstoff wurden 1 Gew.-%, bezogen auf das Gewicht des Polyesters, eines Gemisches aus 49 Gew.-Teilen Pentaerythrit-4-stearat mit einem Schmelzpunkt von ca. 65 °C und 51 Gew.-Teilen monodispersen, kugelförmigen Teilchen aus SiO₂ mit einem Durchmesser von 250 nm zugesetzt und in einem Zweischneckenextruder durchmischt. Der erhaltene Rohstoff wurde mit dem additivfreien Polyesterrohstoff so abgemischt, daß der Gehalt an monodispersen, kugelförmigen SiO₂-Partikeln 1 750 ppm betrug und anschließend in einem Extruder aufgeschmolzen und auf eine polierte Kühlwalze mit einer Oberflächentemperatur von 25 °C extrudiert. Die Vorfolie wurde im Temperaturbereich von 107 bis 115 °C zweistufig mittels Walzen mit einem Streckverhältnis von 4 längs- und in einem Rahmen bei 95 °C um das 3,8fache breitgestreckt. Anschließend wurde noch einmal um das 1,9fache in Maschinenrichtung gestreckt und bei 200 °C ca. 5 s fixiert. Die erhaltene Folie wies, wie die Fig. 2 der unter einem Winkel von 6° nach Schrägbedampfung mit Silber aufgenommenen REM-Aufnahme der Oberfläche zeigt, eine gute Partikelverteilung auf. Die physikalischen Eigenschaften der erhaltenen ca. 9 µm starken Folie sind ebenso in der Tabelle zusammengestellt.

### Beispiel 4

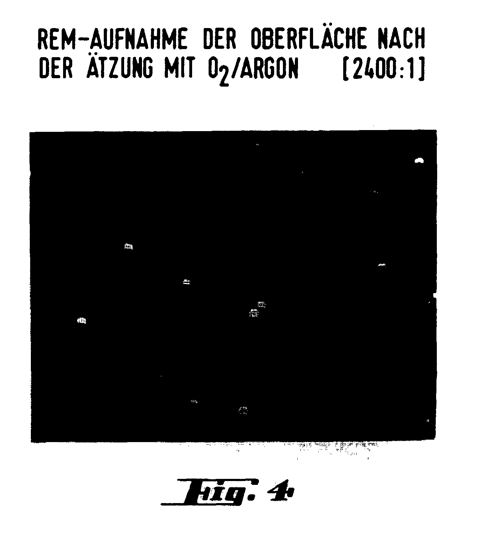

Es wurde entsprechend Beispiel 1 ein Polyesterrohstoff hergestellt, der jedoch ca. 0,5 Gew.-% kugelförmiger SiO₂-Partikel mit einem Durchmesser von 0,9 µm enthielt, die vor der Umesterung in Form einer Mischung aus 49 Gew.-% PEG 1000 und 51 Gew.-% der SiO₂-Partikeln zugesetzt wurden. Aus dem Rohstoff wurde eine 190 µm starke Vorfolie hergestellt, die am Brückner-Karo-Rahmen bei einer Temperatur von 95,5 °C in beiden Richtungen gleichzeitig jeweils um das 3,6fache gestreckt wurde. Die Fig. 3 zeigt ein mit einem Hommel-Gerät unter den angegebenen Bedingungen aufgenommenes Oberflächendiagramm der ca. 14 µm starken Folie, die Fig. 4 eine REM-Aufnahme der Folienoberfläche nach Ätzung derselben mit O₂/Argon (20 min). Beide Aufnahmen lassen auf eine gute Verteilung der kugelförmigen SiO₂-Partikel im Rohstoff schließen. Die Rauhigkeit der Folie betrug 61 nm bei einem cut off von 0,25 mm.

**Tabelle**

| Beispiel | 1 | 2 | 3 |
|---|---|---|---|
| Rauhigkeit Ra (nm) | 21 | 13 | 10 |
| Trübung (%) | 7 | 4 | 4 |
| Haftreibung | 32 | 34 | 37 |
| Gleitreibung | 28 | 30 | 30 |
| Abriebfestigkeit | 2 | - | 1 |
| F₅-Wert (N/mm²) | | | |
| längs | 114 | 125 | 185 |
| quer | 124 | 120 | 110 |

## Patentansprüche

1. Verfahren zur homogenen Verteilung von Inertpartikeln innerhalb eines Polyesterrohstoffes, dadurch gekennzeichnet, daß die Inertpartikel dem Polyester oder der Reaktionsmischung während der Polyesterrohstoffherstellung in Form einer wiederaufschmelzbaren Mischung bestehend aus Inertpartikeln und einem mit dem Polyester verträglichen Dispergiermittel, das einen Schmelzpunkt unterhalb von 200 °C besitzt, zugesetzt werden.

2. Verfahren nach Anspruch 1, dadurch gekennzeichnet, daß das Gemisch 0,1 bis 70 Gew.-% Inertpartikel und 30 bis 99,9 Gew.-% eines mit dem Polyester verträglichen Dispergiermittels enthält.

3. Verfahren nach Anspruch 1, dadurch gekennzeichnet, daß der Polyesterrohstoff 80 bis 99,998 Gew.-% Polyester enthält, 0,001 bis 10 Gew.-% Inertpartikel mit einer mittleren Teilchengröße im Bereich von 0,02 bis 5 µm und 0,0001 bis 10 Gew.-% des mit dem Polyester verträglichen Dispergiermittels.

4. Verfahren nach Anspruch 1, dadurch gekennzeichnet, daß der Polyesterrohstoff als Polyester Polyethylenterephthalat, Polybutylenterephthalat, Poly-1,4-cyclohexylendimethylenterephthalat, oder Polyethlyen-2,6-naphthalindicarboxylat enthält.

5. Verfahren nach Anspruch 1, dadurch gekennzeichnet, daß der Polyesterrohstoff Inertpartikel aus CaCO₃, TiO₂, Al₂O₃, BaSO₄, Calciumphosphat, SiO₂, aus natürlichen und/oder synthetischen Silikaten oder aus Polymeren, die gegebenenfalls oberflächig vernetzt oder gehärtet sind, enthält.

6. Verfahren nach Anspruch 1, dadurch gekennzeichnet, daß der Polyesterrohstoff als mit dem Polyester verträgliches Dispergiermittel die Bausteine des Polyesters und/oder Wachse bzw. Esterwachse sowie Kombinationen von diesen enthält.

7. Verfahren nach Anspruch 1, dadurch gekennzeichnet, daß der Polyesterrohstoff als mit dem Polyester verträgliches Dispergiermittel Dimethylester der Isophthalsäure, Polyalkylenglykole, Copolyester aus Terephthalsäure und Adipinsäure, Montanwachse, Stearate, Polysiloxane oder Polyolefin oder Polyamid sowie Kombinationen von diesen enthält.

8. Verfahren nach Anspruch 1, dadurch gekennzeichnet, daß der Polyesterrohstoff 90 bis 99,8 Gew.-% Polyester, 0,1 bis 5,0 Gew.-% Inertpartikel und 0,1 bis 5 Gew.-% des verträglichen Dispergiermittels enthält.

9. Verwendung des Verfahrens nach einem der Ansprüche 1-8 zur Herstellung einer Polyesterfolie.

## Claims

1. A process for the homogeneous distribution of inert particles within a polyester raw material, which comprises adding the inert particles, in the form of a remeltable mixture composed of inert particles and of a dispersing agent compatible with the polyester and having a melting point below 200°C, to the polyester or to the reaction mixture during the preparation of the polyester raw material.

2. The process as claimed in claim 1, wherein the mixture comprises from 0.1 to 70% by weight of inert particles and from 30 to 99.9% by weight of a dispersing agent compatible with the polyester.

3. The process as claimed in claim 1, wherein the polyester raw material comprises from 80 to 99.998% by weight of polyester, from 0.001 to 10% by weight of inert particles with an average particle size in the range from 0.02 to 5 µm and from 0.001 to 10% by weight of the dispersing agent compatible with the polyester.

4. The process as claimed in claim 1, wherein the polyester present in the polyester raw material is polyethylene terephthalate, polybutylene terephthalate, poly-1,4-cyclohexylenedimethylene terephthalate, or polyethylene 2,6-naphthalenedicarboxylate.

5. The process as claimed in claim 1, wherein the polyester raw material comprises inert particles of CaCO₃, TiO₂, Al₂O₃, BaSO₄, calcium phosphate, SiO₂, of naturally occurring and/or synthetic silicates or of polymers which, if desired, have been cured or crosslinked on their surfaces.

6. The process as claimed in claim 1, wherein the polyester raw material comprises, as dispersing agent compatible with the polyester, the building blocks of the polyester and/or waxes/ester waxes, or also combinations of these.

7. The process as claimed in claim 1, wherein the polyester raw material comprises, as dispersing agent compatible with the polyester, dimethyl isophthalate, polyalkylene glycols, copolyesters of terephthalic acid and adipic acid, montan waxes, stearates, polysiloxanes or a polyolefin or polyamide, or also combinations of these.

8. The process as claimed in claim 1, wherein the polyester raw material comprises from 90 to 99.8% by weight of polyester, from 0.1 to 5.0% by weight of inert particles and from 0.1 to 5% by weight of the compatible dispersing agent.

9. The use of the process as claimed in any one of claims 1-8 for producing a polyester film.

## Revendications

1. Procédé pour la répartition homogène de particules inertes dans une matière première à base de polyester, caractérisé en ce que l'on ajoute les particules inertes au polyester ou au mélange réactionnel pendant la préparation de la matière première à base de polyester, sous forme d'un mélange pouvant être refondu, constitué de particules inertes et d'un dispersant compatible avec le polyester, qui a un point de fusion inférieur à 200°C.

2. Procédé selon la revendication 1, caractérisé en ce que le mélange contient de 0,1 à 70 % en poids de particules inertes et de 30 à 99,9 % en poids d'un dispersant compatible avec le polyester.

3. Procédé selon la revendication 1, caractérisé en ce que la matière première à base de polyester contient de 80 à 99,998 % en poids de polyester, de 0,001 à 10 % en poids de particules inertes ayant une taille moyenne de particules dans la plage allant de 0,02 à 5 µm et de 0,001 à 10 % en poids du dispersant compatible avec le polyester.

4. Procédé selon la revendication 1, caractérisé en ce que la matière première à base de polyester contient en tant que polyester du poly(éthylène téréphtalate), du poly(butylène téréphtalate), du poly(1,4-cyclohexylènediméthylène téréphtalate) ou du poly(éthylène 2,6-naphtalène-dicarboxylate).

5. Procédé selon la revendication 1, caractérisé en ce que la matière première à base de polyester contient des particules inertes de CaCO₃, TiO₂, Al₂O₃, BaSO₄, phosphate de calcium, SiO₂, de silicates naturels et/ou synthétiques ou de polymères qui sont éventuellement durcis ou réticulés en surface.

6. Procédé selon la revendication 1, caractérisé en ce que la matière première à base de polyester contient en tant que dispersant compatible avec le polyester les composants du polyester et/ou des cires ou des cires d'esters, ainsi que des associations de ceux-ci.

7. Procédé selon la revendication 1, caractérisé en ce que la matière première à base de polyester contient en tant que dispersant compatible avec le polyester de l'ester diméthylique de l'acide isophtalique, des polyalkylèneglycols, des copolyesters d'acide téréphtalique et d'acide adipique, des cires de lignite, des stéarates, des polysiloxanes ou une polyoléfine ou un polyamide, ainsi que des associations de ceux-ci.

8. Procédé selon la revendication 1, caractérisé en ce que la matière première à base de polyester contient de 90 à 99,8 % en poids de polyester, de 0,1 à 5,0 % en poids de particules inertes et de 0,1 à 5,0 % en poids du dispersant compatible.

9. Utilisation du procédé selon l'une des revendications 1 à 8, pour la fabrication d'une pellicule de polyester.
